(19) Europäisches Patentamt
European Patent Office
Office européen des brevets

(11) **EP 2 789 488 B1**

(12) **EUROPÄISCHE PATENTSCHRIFT**

(45) Veröffentlichungstag und Bekanntmachung des Hinweises auf die Patenterteilung:
**19.08.2020   Patentblatt 2020/34**

(51) Int Cl.:
**B60K 6/10** (2006.01)     **B60W 10/02** (2006.01)
**B60W 10/06** (2006.01)     **B60W 10/103** (2012.01)
**B60W 10/30** (2006.01)     **B60W 30/188** (2012.01)

(21) Anmeldenummer: **13005677.3**

(22) Anmeldetag: **05.12.2013**

(54) **Antriebssystem**

Drive system

Système d'entraînement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2013   CH 772132013**

(43) Veröffentlichungstag der Anmeldung:
**15.10.2014   Patentblatt 2014/42**

(73) Patentinhaber: **Liebherr Machines Bulle SA**
**1630 Bulle (CH)**

(72) Erfinder:
• **Gay, Benoît**
**1752 Villars-sur-Glâne (CH)**
• **Deeken, Michael**
**1635 La Tour de Trême (CH)**
• **Quasthoff, Marcus**
**1663 Epagny (CH)**
• **Seba, Bouzid**
**1636 Broc (CH)**
• **Dujon, Damien**
**1635 La Tour de Trême (CH)**

(74) Vertreter: **Laufhütte, Dieter et al**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**DE-A1- 19 538 977     DE-A1-102008 050 553**
**US-A- 3 882 950     US-A- 4 131 171**
**US-A1- 2011 320 095     US-B1- 6 668 953**

**Beschreibung**

Die vorliegende Erfindung betrifft ein Antriebssystem mit einem Verbrennungsmotor, welcher ein Hydrauliksystem antreibt und/oder welcher eine Steuerung aufweist, die den Verbrennungsmotor so ansteuert, dass dieser bei transientem Lastmoment mit einer konstanten Soll-Drehzahl arbeitet.

Insbesondere bei Antriebssystemen zum Antrieb eines Hydrauliksystems wird der Verbrennungsmotor dabei üblicherweise bei einer konstanten Soll-Drehzahl betrieben, während die Steuerung des Arbeitsgerätes durch eine Ansteuerung des Hydrauliksystems erfolgt. Hierdurch ergeben sich transiente Lastmomente für den Verbrennungsmotor, welche dieser durch eine entsprechende Erhöhung des Drehmomentes zur Verfügung stellt.

Dabei ist für einen hohen Systemwirkungsgrad des Antriebssystems ausschlaggebend, dass die Verbrennungskraftmaschine in einem energetisch günstigen Betriebspunkt arbeitet. Die energetisch optimale Drehzahl ist jedoch üblicherweise niedriger als die minimale Drehzahl, bei welcher die erforderliche Maximalleistung abgedeckt werden kann. Darüber hinaus muss die Verbrennungskraftmaschine derart betrieben werden, dass die erforderliche Leistungsdynamik, d.h. die Höhe der Leistungszunahme und die Zeitspanne innerhalb der diese Zunahme erfolgen kann, abgedeckt werden kann. Die hierfür nötige Betriebsdrehzahl ist üblicherweise wiederum größer als die Drehzahl, mit welcher die erforderliche Maximalleistung abgedeckt werden könnte und damit deutlich höher als die energetisch optimale Drehzahl.

Dies hat zur Folge, dass die Verbrennungskraftmaschine zu hohen Zeitanteilen mit einem geringeren Wirkungsgrad betrieben werden muss, damit die Dynamikreserve zu jeder Zeit ausreichend hoch ist.

Wird die Ausgangsdrehzahl dabei zu niedrig gewählt, werden zwei Effekte wirksam, welche die Bereitstellung einer ausreichend hohen Abgabeleistung, d.h. das Erreichen der Soll-Leistung, verlangsamen. Zum einen kommt es zu einer zeitverzögerten Steigerung des Abgabedrehmomentes, so dass das Lastmoment häufig erheblich schneller ansteigt als das zur Verfügung stehende Drehmoment. Hierdurch kommt es zu einer unerwünschten Drehzahlabsenkung. Hierdurch muss die erhöhte Abgabeleistung der Verbrennungskraftmaschine jedoch ausgehend von einer Drehzahl aufgebracht werden, die nochmals kleiner als die Ausgangsdrehzahl ist, was wiederum zu einer nochmaligen Verzögerung des Drehmomentanstiegs führt.

Dabei ist es bekannt, an der Abtriebswelle der Verbrennungskraftmaschine einen Schwungradspeicher anzuordnen, dessen Energieinhalt zu einer Teilkompensation des Drehzahleinbruches führt.

Wird allerdings die Betriebsdrehzahl zur Verbesserung des energetischen Wirkungsgrades verringert, verringert sich hierdurch auch der Energieinhalt des Schwungradspeichers, welcher von der Drehzahl im Quadrat abhängt. Je niedriger daher die Betriebsdrehzahl ist, desto schlechter kann der Drehzahleinbruch bei transienten Lastmomenten über den Schwungradspeicher ausgeglichen werden.

Aus den US 4 131 171 A, DE 10 2008 050 553 A und US 6 668 953 B sind Antriebssysteme mit einem durch einen Antriebsmotor angetriebenen Hydrauliksystem und einem Schwungradspeicher bekannt, wobei der Schwungradspeicher von der Abtriebswelle des Antriebsmotors abgekoppelt werden kann.

Aufgabe der vorliegenden Erfindung ist es daher, ein Antriebssystem zur Verfügung zu stellen, welches trotz einer niedrigen Betriebsdrehzahl eine hohe Drehmoment-Dynamik zur Verfügung stellt.

Diese Aufgabe wird erfindungsgemäß durch ein Antriebssystem gemäß Anspruch 1 gelöst.

Die vorliegende Erfindung stellt dabei ein Antriebssystem mit einer Verbrennungskraftmaschine zur Verfügung, welche ein Hydrauliksystem antreibt. Alternativ oder zusätzlich kann die Verbrennungskraftmaschine eine Steuerung aufweisen, welche die Verbrennungskraftmaschine so ansteuert, dass diese bei transientem Lastmoment mit einer konstanten Soll-Drehzahl arbeitet. Weiterhin weist das erfindungsgemäße Antriebssystem einen Schwungradspeicher auf. Erfindungsgemäß ist dabei vorgesehen, dass der Schwungradspeicher über eine Übersetzung ständig mit der Abtriebswelle der Verbrennungskraftmaschine in Verbindung steht.

Durch den erfindungsgemäßen hochdrehenden Schwungradspeicher wird die oben beschriebene Problematik, welche sich bei konventionellen Schwungradspeichern im Hinblick auf die Absenkung der Betriebsdrehzahl ergibt, vermieden. Insbesondere kann die Betriebsdrehzahl problemlos abgesenkt werden, da durch eine entsprechende Wahl der Übersetzung dennoch eine entsprechend hohe Rotationsenergie im Schwungradspeicher gespeichert werden kann. Dies hat gegenüber einer Erhöhung des Massenträgheitsmoments eines im Antriebsstrang angeordneten Schwungradspeichers zudem den Vorteil, dass die gleiche Rotationsenergie mit erheblich geringerem Bauraum und geringerem Gewicht erreicht werden kann. Durch die feste Kopplung des Schwungradspeichers an die Abtriebswelle ist sichergestellt, dass der Energieinhalt des Schwungradspeichers auch tatsächlich zur Verfügung steht, wenn das Lastmoment plötzlich ansteigt.

Bei der Verbrennungskraftmaschine des erfindungsgemäßen Antriebssystems handelt es sich dabei bevorzugt um einen Verbrennungsmotor. Insbesondere kann es sich dabei um einen Dieselmotor handeln.

Bevorzugt liegt die Soll-Drehzahl der erfindungsgemäßen Verbrennungskraftmaschine dabei zwischen 1000 und 2000 Umdrehungen pro Minute. Insbesondere kann die Soll-Drehzahl dabei zwischen 1300 und 1800 Umdrehungen pro Minute betragen. Bevorzugt ermöglicht der Einsatz des erfindungsgemäßen hochdrehenden Schwungradspeichers dabei eine Reduktion der Soll-Drehzahl gegenüber konventionellen Antrieben um 100 bis 500 Umdrehungen pro Minute, bevorzugt um 200 bis 400 Umdrehungen pro Minute. Besonders bevorzugt ist dabei eine Verringerung einer konventionellen Soll-Drehzahl von 1800 Umdrehungen pro Minute auf einen Bereich zwischen 1300 und 1600, insbesondere auf einen Bereich zwischen 1400 und 1500 Umdrehungen pro Minute möglich.

Bevorzugt wird dabei eine Verbrennungskraftmaschine eingesetzt, welche eine Maximaldrehzahl zwischen 1800 und 2500 Umdrehungen aufweist, bevorzugt zwischen 1800 und 2200 Umdrehungen pro Minute, besonders bevorzugt zwischen 1800 und 2000 Umdrehungen pro Minute.

Die Übersetzung zwischen der Drehzahl der Antriebswelle und der Drehzahl des erfindungsgemäßen Schwungradspeichers kann dabei in einem bevorzugten Ausführungsbeispiel zwischen 5 und 15 liegen. Besonders bevorzugt wird der Schwungradspeicher mit einer Übersetzung zwischen 6 und 12 betrieben.

Dabei kann die Masse des Schwungrades in einem Ausführungsbeispiel zwischen 5 und 50 kg betragen, bevorzugt zwischen 10 und 30 kg.

Weiterhin kann das Trägheitsmoment des Schwungradspeichers zwischen 0,05 und 0,5 kg*m$^2$ betragen, bevorzugt zwischen 0,1 und 0,2 kg*m$^2$ .

Wie bereits oben erläutert, soll der Schwungradspeicher insbesondere dazu dienen, um ein Einbrechen der Ist-Drehzahl beim Ansteigen des Lastmomentes zu verhindern bzw. um auch bei niedrigen Soll-Drehzahlen eine ausreichende Drehmoment-Dynamikreserve zur Verfügung zu stellen.

Gemäß einer Ausführungsform der vorliegenden Erfindung kann der Schwungradspeicher über ein Getriebe mit der Abtriebswelle der Verbrennungskraftmaschine in Verbindung stehen. Insbesondere kann es sich dabei um ein Zahnradgetriebe handeln, insbesondere um ein Planetengetriebe. Ebenso kann als Getriebe ein Riemen- oder Kettenantrieb mit entsprechender Übersetzung eingesetzt werden.

Die Verbrennungskraftmaschine kann dabei ein oder mehrere hydraulische Abtriebe antreiben.

Weiterhin können weitere Antriebe vorhanden sein, wie z.B. eine Lichtmaschine, eine Umwälzpumpe, ein Lüfter und/oder ein Kompressor.

Am Antriebsstrang kann auch eine E-Maschine und/oder eine Hydraulikpumpe vorgesehen sein, welche dem Antriebssystem Leistung zuführt oder Leistung entnimmt, um diese einem Energiespeicher zuzuführen oder anderen Leistungsabnehmern zur Verfügung zu stellen.

Die Antriebe können dabei direkt mit der Kurbelwelle der Verbrennungskraftmaschine gekoppelt sein, oder mit dieser durch eine Übersetzung mechanisch gekoppelt sein. Insbesondere kann dabei ein beliebiges Getriebe, ein Drehmomentwandler, eine Kupplung, ein Ring- oder Kettenabtrieb vorgesehen sein. Dabei kann eine Übersetzung für eine einzige oder auch für mehrere angetriebene Komponenten genutzt werden.

Eine gewisse Anzahl der oben genannten angetriebenen Komponenten und Primärseiten vorhandener Übersetzungen können direkt entlang der Kurbelwelle der Verbrennungskraftmaschine angeordnet sein. Weiterhin sind Kaskadierungen der Übersetzungen zu mehrstufigen Übersetzungen möglich.

Das Antriebssystem der vorliegenden Erfindung kann weiterhin ein Verteilergetriebe aufweisen, über welches die Verbrennungskraftmaschine mit einer Mehrzahl von Lasten in Verbindung steht.

Der Schwungradspeicher kann dabei mit der Abtriebswelle der Verbrennungskraftmaschine an einer Stelle zwischen Verbrennungskraftmaschine und Verteilergetriebe verbunden sein, oder mit einem Abtrieb des Verteilergetriebes.

In einer weiteren Ausführungsform kann der Schwungradspeicher in das Verteilergetriebe der Verbrennungskraftmaschine integriert sein. Hierdurch lässt sich Bauraum sparen.

Weiterhin erfindungsgemäß kann das Hydrauliksystem eine Steuerung aufweisen, welche die Leistungsaufnahme und/oder Leistungsabgabe des Hydrauliksystems ansteuert. Insbesondere kann die Ansteuerung des Hydrauliksystems dabei durch Ansteuerung einer Verstellpumpe und/oder eines Verstellmotors erfolgen. Alternativ oder zusätzlich kann die Ansteuerung des Hydrauliksystems auch durch Ansteuerung von einem oder mehreren Ventilen erfolgen.

Bei dem erfindungsgemäßen Hydrauliksystem kann es sich dabei insbesondere um eine Arbeits- und/oder eine Fahrhydraulik handeln.

Wie bereits oben erläutert, wird die Verbrennungskraftmaschine bevorzugt bei einer Betriebsdrehzahl n3 betrieben, welche zusammen mit dem erfindungsgemäßen Schwungradspeicher die erforderliche Leistungsdynamik, d.h. die Höhe der Leistungszunahme und die Zeitspanne innerhalb der diese Zunahme erfolgen muss, abdecken kann. Da im unteren und mittleren Drehzahlbereich die Leistungsdynamik einer Verbrennungskraftmaschine mit steigender Ausgangsdrehzahl ansteigt, ist die Betriebsdrehzahl n3 im Allgemeinen größer als eine Betriebsdrehzahl n2, welche die minimale Drehzahl darstellt, bei welcher die erforderliche Maximalleistung abgedeckt werden kann. Wird dabei die verfügbare Leistung der Verbrennungskraftmaschine bei der Anwendung zumindest annähernd genutzt, so ist diese Drehzahl n2 größer als eine energetisch optimale Drehzahl n1, bei welcher die Verbrennungskraftmaschine in ihrem energetisch günstigsten Betriebspunkt arbeitet.

Durch den erfindungsgemäß vorgesehenen hochdrehenden Schwungradspeicher kann dennoch die Betriebsdrehzahl n3, welche als Soll-Drehzahl zur Ansteuerung der Verbrennungskraftmaschine herangezogen wird, im Vergleich zu bekannten Antriebssystemen verringert werden, da der Schwungradspeicher eine ausreichend hohe Dynamikreserve zur Verfügung stellt bzw. die Verringerung der Dynamikreserve ausgleicht.

Vorteilhafterweise ist die Soll-Drehzahl dabei zumindest über einen üblichen Betriebszyklus, in welchem das Lastmoment ansteigt und wieder abfällt, konstant. Das transiente Lastmoment wird daher nicht durch eine Veränderung der Soll-Drehzahl ausgeglichen, sondern durch Anpassung des Drehmomentes der Verbrennungskraftmaschine.

Erfindungsgemäß ist die Steuerung des Antriebssystems bevorzugt so ausgerüstet, dass die Soll-Drehzahl zur Einstellung der Dynamikreserve einstellbar ist. Wünscht eine Bedienperson daher eine höhere Dynamikreserve, kann die Soll-Drehzahl (unter Verringerung des energetischen Wirkungsgrades) erhöht werden.

Die Ansteuerung des durch das Antriebssystem angetriebenen Gerätes erfolgt dabei bevorzugt nicht durch eine direkte Ansteuerung der Verbrennungskraftmaschine, sondern durch eine Ansteuerung des nachgeschalteten Hydrauliksystems. Insbesondere werden dabei bevorzugt Steuerungssignale einer Bedienperson in Steuersignale zur Ansteuerung des Hydrauliksystems umgewandelt. Hierdurch kann eine entsprechende Erhöhung des auf den Verbrennungsmotor wirkenden Lastmomentes entstehen, welche bei konstanter Soll-Drehzahl das abgegebene Drehmoment erhöht, um die gewünschte Abgabeleistung zur Verfügung stellen zu können.

Weiterhin kann ein Verfahren zum Betrieb eines Antriebssystems mit einer Verbrennungskraftmaschine und mit einem Schwungradspeicher, welche über eine Übersetzung mit der Abtriebswelle der Verbrennungskraftmaschine in Verbindung steht, vorgesehen sein, welches jedoch nicht Teil der vorliegenden Erfindung ist. Erfindungsgemäß wird die Verbrennungskraftmaschine dabei so angesteuert, dass diese bei transienten Lastmomenten mit einer konstanten Soll-Drehzahl arbeitet. Alternativ oder zusätzlich treibt die Verbrennungskraftmaschine dabei ein Hydrauliksystem an.

Bevorzugt erfolgt das Verfahren dabei so, wie dies bereits oben im Hinblick auf das erfindungsgemäße Antriebssystem dargestellt wurde. Das Verfahren kann dabei zum Betrieb eines Antriebssystems dienen, wie es oben dargestellt wurde.

Die vorliegende Erfindung umfasst weiterhin ein verfahrbares Arbeitsgerät und/oder ein Fahrzeug mit einem Antriebssystem, wie es oben dargestellt wurde. Das Antriebssystem kann dabei beispielsweise zum Antrieb eines Fahrwerks und/oder zum Antrieb einer Arbeitsausrüstung dienen.

Besonders bevorzugt treibt das Antriebssystem dabei mindestens eine Hydraulikpumpe eines Hydrauliksystems an. Bevorzugt dient das Hydrauliksystem dabei zum Antrieb einer Arbeitsausrüstung und/oder zum Antrieb eines Fahrwerks des verfahrbaren Arbeitsgerätes und/oder Fahrzeugs.

Bevorzugt wird die Arbeitsausrüstung und/oder das Fahrwerk dabei von einer Bedienperson durch Ansteuerung des Hydrauliksystems angesteuert. Bevorzugt erfolgt die Ansteuerung des Antriebssystems dabei so, wie dies bereits oben beschrieben wurde.

Weiterhin bevorzugt ist das Antriebssystem dabei so aufgebaut, wie dies bereits oben beschrieben wurde.

Ein bevorzugter Anwendungsfall ist dabei ein verfahrbares Arbeitsgerät und/oder Fahrzeug mit einem Unterwagen und einem auf dem Unterwagen um eine vertikale Drehachse angeordneten Oberwagen. Insbesondere kann es sich um eine Erdbewegungsmaschine und/oder um eine Umschlagmaschine, insbesondere um einen Kran oder Bagger handeln.

Wird dabei ein besonders hochdrehender Schwungradspeicher eingesetzt, so ist die Präzession, welche bei einer Drehung des Oberwagens auf den Schwungradspeicher wirkt, zu berücksichtigen. Dies kann zu unerwünschten Krafteinwirkungen auf die beteiligten Komponenten führen.

In einer bevorzugten Ausführungsform ist die Achse des Schwungradspeichers daher parallel zur Drehachse des Oberwagens angeordnet. Eine Drehung des Oberwagens bewirkt daher keine Drehung der Achse des Schwungradspeichers, so dass keine Präzessionskräfte wirken.

Alternativ oder zusätzlich können auch zwei Schwungradspeicher mit entgegengesetzten Drehachsen vorgesehen sein. Insbesondere können dabei die Drehachsen parallel zueinander angeordnet sein und die Schwungradspeicher in entgegengesetzte Richtung drehen. Hierdurch heben sich die Präzessionskräfte auf die Schwungradspeicher bei einer Drehung des Oberwagens zumindest teilweise auf. Bevorzugt sind die beiden Drehachsen dabei in etwa mit gleichem Abstand von der Drehachse des Oberwagens angeordnet.

Das Antriebssystem der vorliegenden Erfindung kann jedoch auch in stationären Anwendungen zum Einsatz kommen. Die vorliegende Erfindung umfasst daher weiterhin ein stationäres Arbeitssystem mit einem erfindungsgemäßen Antriebssystem.

In einer möglichen Ausführungsform der vorliegenden Erfindung wird das Antriebssystem dabei zum Antrieb eines Generators und/oder einer Hydraulikversorgung eingesetzt.

Die vorliegende Erfindung wird nun anhand von Ausführungsbeispielen sowie Zeichnungen näher dargestellt. Dabei zeigen:

Figur 1: ein Ausführungsbeispiel des erfindungsgemäßen Antriebssystems mit einem hochdrehenden Schwungradspeicher und

Figur 2: ein Ausführungsbeispiel eines erfindungsgemäßen verfahrbaren Arbeitsgerätes mit einem erfindungsgemäßen Antriebssystem.

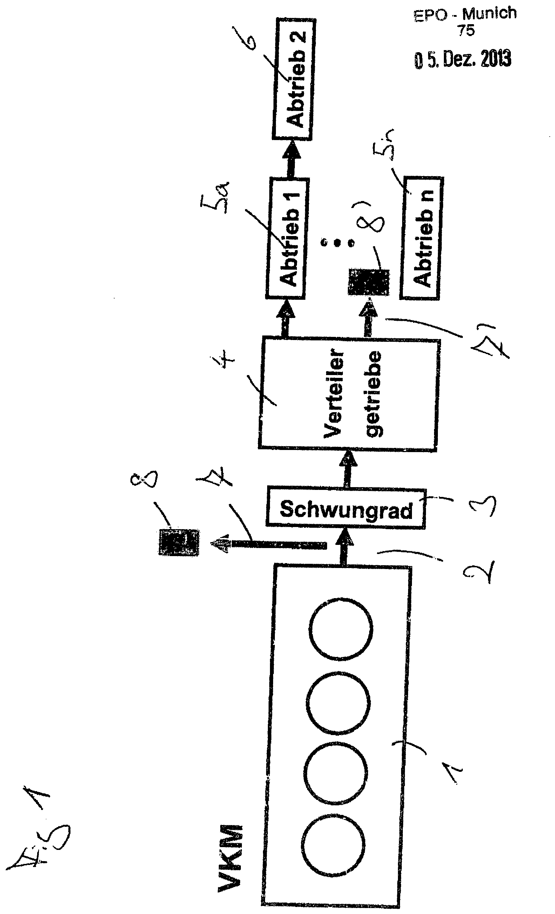

Figur 1 zeigt ein Ausführungsbeispiel eines erfindungsgemäßen Antriebssystems. Dabei ist eine Verbrennungskraftmaschine 1, im Ausführungsbeispiel ein Dieselmotor, vorgesehen, welcher eine beliebige Anzahl von Abtrieben 5a bis 5n antreibt. Insbesondere handelt es sich bei einem oder mehreren der Abtriebe 5a bis 5n um hydraulische Abtriebe. Insbesondere kann es sich dabei um Hydrauliksysteme aus mindestens einer Hydraulikpumpe und mindestens einem hydraulischen Motor oder hydraulischen Aktor handeln, welche von der Hydraulikpumpe angetrieben werden. Dabei treibt im Ausführungsbeispiel das Hydrauliksystem 5a eine Arbeitsausrüstung 6 an. Es können zusätzlich zu den hydraulischen Abtrieben weitere Abtriebe vorhanden sein, wie z.B. eine Lichtmaschine, eine Umwälzpumpe, ein Lüfter und/oder ein Kompressor. Am Antriebsstrang kann auch eine E-Maschine und/oder eine Hydraulikpumpe vorhanden sein, die dem Antriebssystem Leistung zuführen oder Leistung entnehmen kann, um diese einem Energiespeicher zuzuführen oder anderen Leistungsabnehmern zur Verfügung zu stellen.

Die oben genannten Abtriebe 5a bis 5n können direkt mit der Kurbelwelle 2 der Verbrennungskraftmaschine gekoppelt sein. Im Ausführungsbeispiel ist jedoch ein Verteilergetriebe 4 vorgesehen, welches die Abtriebe 5a bis 5n mechanisch mit der Kurbelwelle 2 der Verbrennungskraftmaschine koppelt. Hierbei kann das Verteilergetriebe 4 jeweils Über- oder Untersetzungen für die einzelnen Abtriebe vorsehen. Alternativ oder zusätzlich können zur Kopplung der Abtriebe an die Kurbelwelle ein oder mehrere Drehmomentwandler, Kupplungen, und/oder Riemen- oder Kettenabtriebe vorgesehen sein.

Dabei kann eine Übersetzung für eine einzige oder auch für mehrere angetriebene Komponenten genutzt werden. Weiterhin können eine gewisse Anzahl von angetriebenen Komponenten und Primärseiten vorhandener Übersetzungen direkt entlang der Kurbelwelle der Verbrennungskraftmaschine angeordnet sein. Weiterhin sind Kaskadierungen der Übersetzungen zu mehrstufigen Übersetzungen möglich.

Im Ausführungsbeispiel ist zwischen der Verbrennungskraftmaschine 1 und dem Verteilergetriebe 4 weiterhin ein konventionelles Schwungrad 3 vorgesehen, welches mit der Rotationsgeschwindigkeit der Kurbelwelle 2 rotiert.

Bei der Verbrennungskraftmaschine handelt es sich im Ausführungsbeispiel um einen Verbrennungsmotor, insbesondere um einen Dieselmotor. Der Verbrennungsmotor weist dabei im Ausführungsbeispiel eine maximale Arbeitsdrehzahl zwischen 1800 und 2200 Umdrehungen pro Minute auf. Eine übliche Betriebsdrehzahl für den Verbrennungsmotor würde dabei ca. 1800 Umdrehungen betragen.

Ziel der vorliegenden Erfindung ist es dabei, eine Drehzahlverringerung von einer solchen Betriebsdrehzahl von 1800 auf eine Betriebsdrehzahl zwischen 1400 und 1500 Umdrehungen pro Minute ohne Dynamikverlust zu ermöglichen. Hierdurch wird ein höherer Systemwirkungsgrad des Antriebssystems erreicht, da der Verbrennungsmotor bei einem energetisch günstigeren Betriebspunkt arbeiten kann.

Das Antriebssystem weist dabei eine Steuerung auf, welche die Verbrennungskraftmaschine 1 während einer Anwendung auf einer konstanten Soll-Drehzahl hält. Das Lastmoment der Abtriebe 5 kann dagegen transient sein. Handelt es sich dabei um eine Arbeits- oder Fahrhydraulik, erfolgt die Ansteuerung des Arbeitsgerätes bzw. Fahrzeugs durch die Ansteuerung der Hydraulik, welche demzufolge wechselnde Lastmomente von der Verbrennungskraftmaschine anfordert.

Bei einer Erhöhung des Lastmomentes vergeht dabei zunächst ein gewisser Zeitraum, bis der Verbrennungsmotor das damit erhöhte Soll-Drehmoment erzeugen und damit die Soll-Leistung bereitstellen kann. Die Erhöhung des Lastmomentes hat jedoch weiterhin einen ungewollten Drehzahleinbruch zur Folge, welcher das Leistungsdefizit zwischen Soll- und Ist-Leistung nochmals erhöht. Dies erhöht nochmals die Zeitdauer, bis das gewünschte Soll-Drehmoment erreicht wird.

Aufgrund der Massenträgheitsmomente der rotierenden Antriebsstrang-Komponenten beinhaltet das Antriebssystem einen Rotationsenergiespeicher, dessen Energieinhalt wiederum zu einer Teilkompensation der Drehzahlreduzierung führt. Die Rotationsenergie eines Systems mit einem Massenträgheitsmoment $\theta$ und einer Kreisdrehzahl $\omega$ beträgt dabei:

$$E_{rot} = 1/2\ \theta\ \omega^2$$

Die Herabsetzung der Soll-Betriebsdrehzahl hat damit zur Folge, dass auch der Energieinhalt des Rotationsenergiespeichers sinkt. Im Fall einer transienten Soll-Abgabeleistung der Verbrennungskraftmaschine ist der Drehzahleinbruch hinsichtlich des Zahlenwertes der Drehzahl und auch im Hinblick auf die Zeitdauer, welche benötigt wird, um die Soll-Drehzahl wieder zu erreichen, daher umso stärker ausgeprägt, je niedriger die Betriebsdrehzahl ist.

Bei einer konventionellen Lösung könnte diesem Effekt entgegengewirkt werden, indem das Massenträgheitsmoment $\theta$ des Schwungrades 3 erhöht wird. Eine solche Vergrößerung des Schwungrades 3 hat jedoch eine Erhöhung der Bauraumlänge zur Folge und führt dazu, dass ein neues Schwungradgehäuse benötigt wird.

Gemäß der vorliegenden Erfindung ist dagegen ein zusätzliches Schwungrad 8 vorgesehen, welches über eine Übersetzung 7 ständig mit der Verbrennungskraftmaschine in Verbindung steht. Das zusätzliche Schwungrad kann dabei wie das Schwungrad 8 motorseitig über eine Übersetzung 7 angebracht werden, welche mit der Kurbelwelle 2 in Verbindung steht. Alternativ kann das zusätzliche Schwungrad auch als Schwungrad 8' als ein zusätzlicher Abtrieb des Verteilergetriebes 4 vorgesehen sein. Die hierbei vorgesehene Übersetzung 7' kann damit ins Verteilergetriebe 4 integriert sein. Weiterhin ist es denkbar, das zusätzliche Schwungrad komplett in das Verteilergetriebe 4 zu integrieren.

Die Rotationsenergie $E_{rot,a}$ des zusätzlichen Schwungrades beträgt bei einer Übersetzung

a = Drehzahl Schwungradspeicher/Drehzahl Verbrennungskraftmaschine

bezogen auf die Kurbelwellendrehzahl $\omega_{VKM}$ und in Bezug zu einer Rotationsenergie $E_{rot}$ eines Schwungradspeichers ohne Übersetzung

$$E_{rot,a} = 1/2\ \theta\ a^2\ \omega_{vkm}^2 = a^2\ E_{rot}$$

Durch eine entsprechende Einstellung der Übersetzung kann damit die im Schwungradspeicher gespeicherte Rotationsenergie trotz einer verringerten Betriebsdrehzahl $\omega_{VKM}$ konstant gehalten oder sogar erhöht werden.

Ein denkbarer Bereich für die eingesetzten Übersetzungen kann dabei zwischen 5 und 15 liegen, bevorzugt zwischen 6 und 12. Die Masse des Schwungrades kann beispielsweise zwischen 5 und 50 kg betragen, bevorzugt zwischen 10 und 30 kg. Das Trägheitsmoment kann zwischen 0,05 und 0,5 kg*m$^2$ betragen, bevorzugt zwischen 0,1 und 0,2 kg*m$^2$.

Typische Anwendungen des erfindungsgemäßen Antriebssystems liegen dabei im Bereich der verfahrbaren Arbeitsgeräte, bei welchen der Motor eine Arbeits- und/oder Fahrhydraulik antreibt. Die Steuerung der Last erfolgt dabei über eine Ansteuerung der Hydraulik, insbesondere über eine Ansteuerung der Hydrauliksysteme durch Ansteuerung von Verstellpumpen, Verstellmotoren und/oder Ventilanordnungen. Bei solchen Anordnungen treten üblicherweise Lastsprünge von 15% auf 100% der Last innerhalb von weniger als 150 ms auf.

Die Verbrennungskraftmaschine wird dabei bei einer Soll-Drehzahl betrieben, welche über einen typischen Lastzyklus konstant ist. Insbesondere ist hierfür eine entsprechende Drehzahl-Regeleinrichtung vorgesehen.

Damit die im erfindungsgemäßen Schwungradspeicher 8 bzw. 8' gespeicherte Rotationsenergie zum zumindest teilweisen Ausgleich der Lastsprünge genutzt werden kann, ist dieser bevorzugt fest an den Antriebsstrang gekoppelt. Gegebenenfalls könnte jedoch auch eine sehr schnell reagierende Kupplung zur Anbindung des Schwungradspeichers eingesetzt werden, bevorzugt eine Kupplung mit einer Reaktionszeit von weniger als 10 ms.

Dabei kann vorgesehen sein, dass die Betriebsdrehzahl von dem Bediener der Arbeitsmaschine eingestellt werden kann, um hierdurch die verfügbare Dynamik vorzugeben. Der erfindungsgemäße Schwungradspeicher erlaubt es dabei, die Betriebsdrehzahl zur Einsparung von Kraftstoff zu verringern, und dennoch eine ausreichende Dynamik zur Verfügung zu haben.

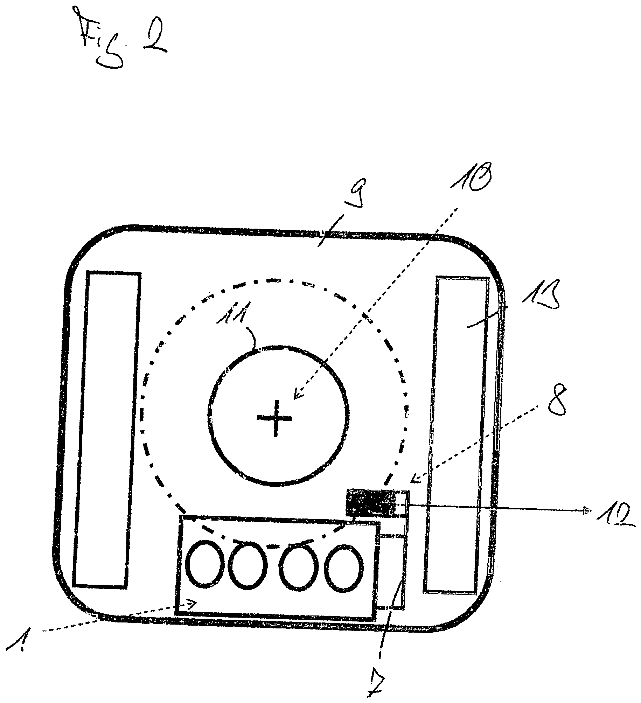

In Figur 2 ist dabei ein typisches Ausführungsbeispiel eines erfindungsgemäßen verfahrbaren Arbeitsgerätes mit einem erfindungsgemäßen Antriebssystem gezeigt.

Das verfahrbare Arbeitsgerät weist dabei einen Unterwagen mit einem Fahrwerk 13 auf, auf welchem ein um eine vertikale Drehachse 10 drehbarer Oberwagen 9 angeordnet ist. Hierfür ist ein Drehkranz 11 zwischen Unterwagen und Oberwagen vorgesehen. Bei dem Fahrwerk 13 kann es sich dabei um ein oder mehrere bereifte Achsen und/oder ein Raupenfahrwerk handeln.

Auf dem Oberwagen ist die Verbrennungskraftmaschine 1 vorgesehen, welche erfindungsgemäß ein Hydrauliksystem antreibt. Das Hydrauliksystem treibt dabei bevorzugt zumindest die Arbeitshydraulik des Arbeitsgerätes an, beispielsweise ein oder mehrere Hydraulikzylinder und/oder Hydraulikmotoren zum Antrieb einer Arbeitsausrüstung, beispielsweise eines Auslegers, eines Stieles und/oder einer Winde. Weiterhin kann die Arbeitshydraulik auch zur Drehung des Oberwagens über einen Hydraulikmotor eingesetzt werden. Zudem kann das Hydrauliksystem auch zum Antrieb des Fahrwerks dienen.

Dabei ist ebenfalls am Oberwagen der erfindungsgemäße hochdrehende Schwungradspeicher 8 vorgesehen, welcher über die Übersetzung 7 mit der Kurbelwelle der Verbrennungskraftmaschine 1 in Verbindung steht.

Bei dem in Figur 2 gezeigten Ausführungsbeispiel liegt die Drehachse 12 des Schwungradspeichers 8 dabei in einer Ebene, welche senkrecht auf der vertikalen Drehachse 10 des Oberwagens steht. Eine solche Anordnung erlaubt eine besonders einfache Anbindung an die Kurbelwelle der Verbrennungskraftmaschine, da auch diese üblicherweise in dieser Ebene verläuft.

Allerdings ist bei einer solchen Anordnung die aufgrund der Drehimpulserhaltung im Schwungradspeicher bei Drehung des Oberwagens wirkende Präzession zu beachten, welche bei zu großen Rotationsenergien im Schwungradspeicher zu ungewünschten Kippbewegungen des Oberwagens führen kann. Weiterhin führt diese zu einer erhöhten Beanspruchung der Bauteile, insbesondere des Drehlagers 11.

Bei einem typischen Betriebszyklus eines erfindungsgemäßen Arbeitsgerätes wird dabei der Oberwagen zyklisch in beide Richtungen um seine vertikale Achse 10 gedreht, um beispielsweise in einer ersten Drehstellung Schüttgut über einen Greifer oder eine Schaufel aufzunehmen und an einer anderen Stelle wieder abzulegen.

Diese zyklische Beanspruchung mit schnellen Lastwechseln erfordert dabei zum einen eine hohe Dynamik des Antriebssystems, welche durch einen entsprechend dimensionierten erfindungsgemäßen Schwungradspeicher 8 bzw. Übersetzung 7 zur Verfügung gestellt wird.

Um eine Belastung der Oberwagens durch Präzessionskräfte zu vermeiden, kann die Drehachse 12 des Schwungradspeichers 8 anders als in Fig. 2 gezeigt so angeordnet werden, dass die Präzessionskräfte möglichst gering gehalten werden. Beispielsweise kann die Drehachse 12 des Schwungradspeichers dabei parallel zur Drehachse 10 des Oberwagens angeordnet werden. Hierdurch können Präzessionskräfte komplett vermieden werden.

Weiterhin ist es denkbar, die Energiespeicherung auf zwei gleichartige Rotationsspeicher mit jeweils umgekehrten Drehimpulsen zu verteilen, beispielsweise auf zwei Rotationsspeicher mit parallelen, jedoch im Hinblick auf die Drehrichtung umgekehrten Drehachsen. Hierdurch heben sich in Bezug auf das Gesamtsystem die Präzessionen auf die beiden Schwungradspeicher auf.

**Patentansprüche**

1.  Antriebssystem mit einer Verbrennungskraftmaschine (1), welches ein Hydrauliksystem (5) antreibt und/oder welches eine Steuerung aufweist, welche die Verbrennungskraftmaschine (1) so ansteuert, dass diese bei transientem Lastmoment mit einer konstanten Soll-Drehzahl arbeitet, wobei das Antriebssystem einen Schwungradspeicher (8) umfasst,
    **dadurch gekennzeichnet,**
    **dass** der Schwungradspeicher (8) über eine Übersetzung (7) mit der Abtriebswelle (2) der Verbrennungskraftmaschine (1) ständig in Verbindung steht.

2.  Antriebssystem nach Anspruch 1, wobei es sich bei der Verbrennungskraftmaschine (1) um einen Verbrennungsmotor, insbesondere um einen Dieselmotor handelt.

3.  Antriebssystem nach Anspruch 1 oder 2, wobei die Soll-Drehzahl zwischen 1000 und 2000 Umdrehungen pro Minute liegt, bevorzugt zwischen 1300 und 1800 Umdrehungen pro Minute.

4.  Antriebssystem nach einem der vorangegangenen Ansprüche, wobei die Übersetzung zwischen 5 und 15 liegt, bevorzugt zwischen 6 und 12.

5.  Antriebssystem nach einem der vorangegangenen Ansprüche, wobei die Masse des Schwungrads zwischen 5 kg und 50 kg, bevorzugt zwischen 10 kg und 30 kg liegt und/oder wobei das Trägheitsmoment des Schwungradspeichers (8) zwischen 0,05 kg*m$^2$ und 0,5 kg*m$^2$ beträgt.

6.  Antriebssystem nach einem der vorangegangenen Ansprüche, wobei dei Schwungradspeicher (8) über ein Getriebe (7, 7') mit der Abtriebswelle der Verbrennungskraftmaschine in Verbindung steht.

7.  Antriebssystem nach einem der vorangegangenen Ansprüche, wobei der Schwungradspeicher (8) in ein Verteilergetriebe (4) der Verbrennungskraftmaschine integriert ist.

8.  Antriebssystem nach einem der vorangegangenen Ansprüche, mit einer Steuerung des Hydrauliksystems, welche die Leistungsaufnahme und/oder - abgabe des Hydrauliksystems ansteuert, insbesondere durch Ansteuerung einer Verstellpumpe und/oder eines Verstellmotors und/oder einer Ventilsteuerung.

9.  Antriebssystem nach einem der vorangegangenen Ansprüche, wobei es sich bei dem Hydrauliksystem vorteilhafterweise um eine Arbeits- und/oder Fahrhydraulik handelt.

10.  Antriebssystem nach einem der vorangegangenen Ansprüche, wobei die Soll Drehzahl zur Einstellung der Dynamikreserve über eine Steuerung einstellbar ist.

11.  Verfahrbares Arbeitsgerät und/oder Fahrzeug mit einem Antriebssystem nach einem der vorangegangenen Ansprüche, wobei das Antriebssystem vorteilhafterweise zum Antrieb eines Fahrwerks und/oder einer Arbeitsausrüstung dient, und/oder wobei das Antriebssystem mindestens eine Hydraulikpumpe eines Hydrauliksystems antreibt, wobei das verfahrbare Arbeitsgerät und/oder Fahrzeug bevorzugt einen Unterwagen und einen auf dem Unterwagen um eine vertikale Drehachse (10) angeordneten Oberwagen (9) umfasst, wobei es sich insbesondere um eine Erdbewegungsmaschine und/oder Umschlagmaschine, insbesondere Kran oder Bagger, handelt, wobei bevorzugt die Achse (12) des Schwungradspeichers (8) parallel zur Drehachse (10) des Oberwagens angeordnet ist und/oder wobei zwei Schwungradspeicher (8) mit entgegengesetzten Drehachsen (12) vorgesehen sind.

12.  Stationäres Arbeitssystem mit einem Antriebssystem nach einem der vorangegangenen Ansprüche, wobei das Antriebssystem vorteilhafterweise zum Antrieb eines Generators und/oder einer Hydraulikversorgung eingesetzt wird.

**Claims**

1.  Drive system comprising an internal combustion engine (1), which system drives a hydraulic system (5) and/or comprises a controller which actuates the internal combustion engine (1) such that it operates at a constant target speed with a transient load moment, wherein the drive system comprises a flywheel energy storage means (8),

**characterised in that**
the flywheel energy storage means (8) is constantly connected to the output shaft (2) of the internal combustion engine (1) via a transmission (7).

2. Drive system according to claim 1, wherein the internal combustion engine (1) is an engine, in particular a diesel engine.

3. Drive system according to claim 1 or 2, wherein the target speed is between 1000 and 2000 revolutions per minute, preferably between 1300 and 1800 revolutions per minute.

4. Drive system according to any of the preceding claims, wherein the transmission ratio is between 5 and 15, preferably between 6 and 12.

5. Drive system according to any of the preceding claims, wherein the mass of the flywheel is between 5 kg and 50 kg, preferably between 10 kg and 30 kg and/or wherein the moment of inertia of the flywheel energy storage means (8) is between $0.05$ kg*m$^2$ and $0.5$ kg*m$^2$.

6. Drive system according to any of the preceding claims, wherein the flywheel energy storage means (8) is connected to the output shaft of the internal combustion engine via a transmission (7, 7').

7. Drive system according to any of the preceding claims, wherein the flywheel energy storage means (8) is integrated in a transfer case (4) of the internal combustion engine.

8. Drive system according to any of the preceding claims, comprising a controller of the hydraulic system, which actuates the power input and/or output of the hydraulic system, in particular by actuating a variable displacement pump and/or a variable displacement motor and/or a valve controller.

9. Drive system according to any of the preceding claims, wherein the hydraulic system is advantageously working hydraulics and/or traction hydraulics.

10. Drive system according to any of the preceding claims, wherein the target speed can be adjusted via a controller in order to adjust the dynamic power reserves.

11. Movable working equipment and/or vehicle comprising a drive system according to any of the preceding claims, wherein the drive system advantageously serves to drive running gear and/or work equipment, and/or wherein the drive system drives at least one hydraulic pump of a hydraulic system, wherein the movable working equipment and/or vehicle preferably comprises an undercarriage and a superstructure (9) arranged on the undercarriage about a vertical rotational axis (10), wherein it is in particular an earth-moving machine and/or a material-handling machine, in particular a crane or excavator, wherein the axis (12) of the flywheel energy storage means (8) is preferably arranged in parallel with the rotational axis (10) of the superstructure and/or wherein two flywheel energy storage means (8) having opposing rotational axes (12) are provided.

12. Stationary work system comprising a drive system according to any of the preceding claims, wherein the drive system is advantageously used to drive a generator and/or a hydraulic supply.

**Revendications**

1. Système d'entraînement avec une machine à combustion interne (1), lequel entraîne un système hydraulique (5) et/ou lequel présente une commande, laquelle pilote la machine à combustion interne (1) de telle sorte que celle-ci fonctionne à une vitesse de rotation théorique constante en cas de couple de charge transitoire, dans lequel le système d'entraînement comprend un accumulateur à volant d'inertie (8),
**caractérisé en ce**
**que** l'accumulateur à volant d'inertie (8) est relié en permanence à l'arbre de sortie (2) de la machine à combustion interne (1) par l'intermédiaire d'une démultiplication (7).

2. Système d'entraînement selon la revendication 1, dans lequel la machine à combustion interne (1) est un moteur à combustion interne, en particulier un moteur Diesel.

3. Système d'entraînement selon la revendication 1 ou 2, dans lequel la vitesse de rotation théorique est comprise entre 1000 et 2000 tours par minute, de manière préférée entre 1300 et 1800 tours par minute.

4. Système d'entraînement selon l'une quelconque des revendications précédentes, dans lequel la démultiplication est comprise entre 5 et 15, de manière préférée entre 6 et 12.

5. Système d'entraînement selon l'une quelconque des revendications précédentes, dans lequel la masse du volant d'inertie est comprise entre 5 kg et 50 kg, de manière préférée entre 10 kg et 30 kg, et/ou dans lequel le couple d'inertie de l'accumulateur à volant d'inertie (8) est compris entre $0,05$ kg*m$^2$ et $0,5$ kg*m$^2$.

**6.** Système d'entraînement selon l'une quelconque des revendications précédentes, dans lequel l'accumulateur à volant d'inertie (8) est relié à l'arbre de sortie de la machine à combustion interne par l'intermédiaire d'une boîte de vitesses (7, 7').

**7.** Système d'entraînement selon l'une quelconque des revendications précédentes, dans lequel l'accumulateur à volant d'inertie (8) est intégré dans une boîte de transfert (4) de la machine à combustion interne.

**8.** Système d'entraînement selon l'une quelconque des revendications précédentes, avec une commande du système hydraulique, laquelle pilote l'absorption de puissance et/ou la distribution de puissance du système hydraulique, en particulier en pilotant une pompe d'ajustement et/ou un moteur d'ajustement et/ou une commande de soupape.

**9.** Système d'entraînement selon l'une quelconque des revendications précédentes, dans lequel le système hydraulique est de manière avantageuse un mécanisme hydraulique de travail et/ou de marche.

**10.** Système d'entraînement selon l'une quelconque des revendications précédentes, dans lequel la vitesse de rotation théorique peut être réglée pour régler la réserve dynamique par l'intermédiaire d'une commande.

**11.** Appareil de travail pouvant être déplacé et/ou véhicule avec un système d'entraînement selon l'une quelconque des revendications précédentes, dans lequel le système d'entraînement sert de manière avantageuse à l'entraînement d'un train de roulement et/ou d'un équipement de travail, et/ou dans lequel le système d'entraînement entraîne au moins une pompe hydraulique d'un système hydraulique, dans lequel l'appareil de travail et/ou le véhicule pouvant être déplacé comprennent de manière préférée un châssis et un bâti supérieur (9) disposé sur le châssis autour de l'axe de rotation (10) vertical, dans lequel il est en particulier une machine de déplacement de terre et/ou une machine de manutention, en particulier une grue ou un excavateur, dans lequel de manière préférée l'axe (12) de l'accumulateur à volant d'inertie (8) est disposé de manière parallèle par rapport à l'axe de rotation (10) du bâti supérieur et/ou dans lequel deux accumulateurs à volant d'inertie (8) sont prévus avec des axes de rotation (12) opposés.

**12.** Système de travail stationnaire avec un système d'entraînement selon l'une quelconque des revendications précédentes, dans lequel le système d'entraînement est utilisé de manière avantageuse pour l'entraînement d'un générateur et/ou d'une alimentation hydraulique.

EPO - Munich
75

0 5. Dez. 2013

Fig. 1

VKM

Schwungrad

Verteiler getriebe

Abtrieb 1

Abtrieb 2

Abtrieb n

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4131171 A
- DE 102008050553 A
- US 6668953 B